# EUROPEAN PATENT APPLICATION

(11) **EP 3 402 300 A1**
(43) Date of publication of application: **14.11.2018**
(21) Application number: 17735835.5
(22) Date of filing: 05.01.2017
(51) Int. Cl.: H04W 76/06

(54) **UE CONTEXT MANAGEMENT METHOD AND DEVICE**

(30) Priority: 06.01.2016 CN 201610007236
(71) Applicant: Sharp Kabushiki Kaisha, Sakai City, Osaka 590-8522 (JP)
(72) Inventor: CHANG, Ningjuan, Shanghai 201203 (CN); LIU, Renmao, Shanghai 201203 (CN)
(74) Representative: Müller Hoffmann & Partner
(86) International application number: PCT/CN2017/070266
(87) International publication number: WO 2017/118397

(57) **Abstract**

The present invention provides a UE context management method executed at a user equipment (UE) and a related UE thereof. The method comprises: when the UE or a UE radio resource control (RRC) layer receives an RRC connection suspension message from an evolved NodeB (eNB) or the UE initiates an RRC connection suspend procedure, starting, by the UE or the UE RRC layer, a UE context management timer. The RRC connection suspension message or an RRC connection suspend procedure is used to suspend an RRC connection at the UE and store the UE context. The method further comprises: if the UE context management timer expires, discarding, by the UE or the UE RRC layer, the stored UE context.

## Description

### Technical Field

The present invention relates to the technical field of wireless communication. In particular, the present invention relates to a method and device for UE context management.

### Background

With the extensive application of the Internet of Things and its terminal devices, it becomes crucial to address the matter of designing a wireless network technology adapted for the communication of the Internet of Things. The 3rd Generation Partnership Project (3GPP) is currently developing a new access system for the purpose of designing a wireless access technology with low complicity and low throughput to meet the needs of the wireless Internet of Things, and is called the Narrowband-Internet of Things (NB-IoT). The features of this access technology include: supporting large-scale devices with low throughput, low latency sensitivity, ultra-low device cost, ultra-low power consumption, and optimized network architecture.

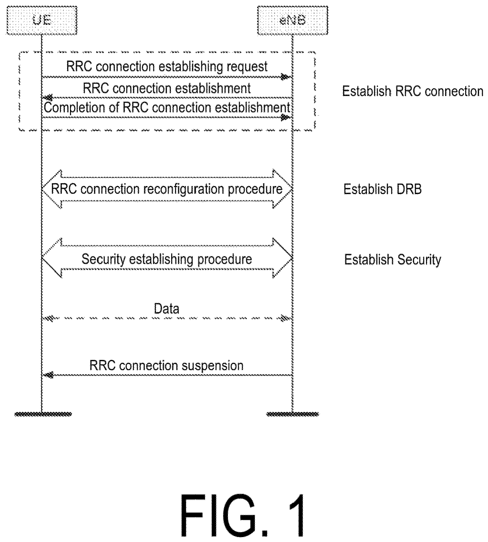

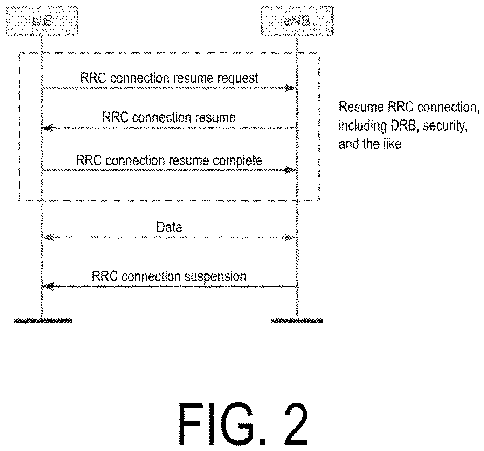

Regarding optimizing the network architecture, the current 3GPP introduces a solution called user plane solution, which is briefly described as follows:
1. After a user equipment (UE) accesses the network, a connection to the network is established based on the conventional mechanism and data is transmitted through the established connection. As illustrated in FIG. 1, a radio resource control (RRC) connection is established; a data radio bearer (DRB) is established and security is established; and then data is transmitted when necessary.
2. In the conventional long term evolution (LTE) system, after the completion of data transmission between a UE and an evolved NodeB (eNB), the RRC connection is released; UE context is deleted; and the system enters an RRC idle state. In the user plane solution, on the other hand, after the completion of data transmission, the UE and the eNB suspend the RRC connection, and store the UE context. As illustrated in FIG. 1, the eNB notifies the UE that the RRC connection is suspended via RRC signaling, and stores the UE context.
3. As illustrated in FIG. 2, when the UE has uplink data to send or has downlink data to receive, the UE initiates an RRC connection resume procedure to the eNB. Since the UE and the eNB store the UE context, this procedure may resume the RRC connection; and data transmission may be directly implemented without needing to establish the DRB via an RRC reconfiguration procedure; further, air interface security does not need to be established via a security establishing procedure. One can see that this manner saves signaling overhead of the air interface.

As described above, in the user plane solution, by introducing an RRC connection suspend/resume procedure, control signaling overhead for data transmission is reduced. This means that when an RRC connection of the UE is suspended, the UE and the eNB both need to store the UE context until uplink data or downlink data is transmitted, such that the RRC connection resume procedure is successfully performed. In the network, various applications exist especially in the Internet of Things. Because a large number of UE devices that transmit small data services exist, such as a terminal device configured for water and electricity meter reading, the eNB needs to maintain a large amount of UE context. In addition, the data used in many services is not frequently sent; between two data transmissions, the eNB and the UE need to keep the UE context stored for a long time, which in turn becomes a burden. In another scenario, if the UE moves to the coverage of another eNB, the UE context stored on the original eNB becomes useless. Considering the above problem, how to properly manage the UE context is a problem that needs to be solved urgently.

### Summary of Invention

As described in the background part, after the user plane solution is introduced to the NB-IoT technology, both the eNB and the UE need to store the UE context. In some scenarios, it is a problem to unlimitedly store the UE context, and the conventional mechanism fails to address this problem. This is the problem the present invention pays attention to and aims to address.

The method according to the present invention is not limited to the Release 13 NB-IoT system described in the background. It is also applicable to other non-NB-IoT apparatuses and systems, such as machine type communication (MTC) scenario and the like.

According to a first aspect of embodiments of the present invention, a UE context management method executed at a user equipment (UE) is provided, the method comprising: when the UE or a UE radio resource control (RRC) layer receives an RRC connection suspension message from an evolved NodeB (eNB) or the UE initiates an RRC connection suspend procedure, starting, by the UE or the UE RRC layer, a UE context management timer, wherein the RRC connection suspension message or an RRC connection suspend procedure is used to suspend an RRC connection at the UE and store the UE context; and if the UE context management timer expires, releasing, by the UE or the UE RRC layer, the stored UE context.

Optionally, the method further comprises: if the UE or the UE RRC layer initiates an RRC connection resume procedure or an RRC connection setup procedure when the UE context management timer is running, stopping, by the UE or the UE RRC layer, the UE context management timer. Optionally, the method further comprises: if the UE or the UE RRC layer initiates the RRC connection resume procedure, the stored UE context remains to be kept; if the UE or the UE RRC layer initiates an RRC connection setup procedure, the stored UE context is discarded.

Optionally, the method further comprises: if a paging message is received when the UE context management timer is running, stopping, by the UE or the UE RRC layer, the UE context management timer, and the stored UE context remains to be kept.

Optionally, the UE context is UE access stratum (AS) context.

Optionally, the UE is a Narrowband-Internet of Things (NB-IoT) UE or a non-NB-IoT UE.

Optionally, a value of the timer is predetermined to a fixed value.

Optionally, the value of the timer is configured via an RRC signaling by the eNB or configured via a non-access stratum (NAS) signaling by a mobility management entity (MME).

According to a second aspect of embodiments of the present invention, a user equipment (UE) is provided, wherein the UE is configured to manage UE context. The UE comprises: a timer management unit, configured to: when the UE receives an RRC connection suspension message from an evolved NodeB (eNB) or the UE initiates an RRC connection suspend procedure, start a UE context management timer by the UE or the UE RRC layer; a UE context management unit, configured to: when the UE receives the RRC connection suspension message from the eNB, the UE initiates the RRC connection suspend procedure, suspends an RRC connection at the UE and stores UE context; and if the UE context management timer expires, discards the stored UE context.

Optionally, the timer management unit is further configured to: if the UE or the UE RRC layer initiates an RRC connection resume procedure or an RRC connection setup procedure when the UE context management timer is running, stop the UE context management timer. Further, the UE context management unit may be further configured to: if the UE or the UE RRC layer initiates the RRC connection resume procedure when the UE context management timer is running, the stored UE context remains to be kept; or if the UE or the UE RRC layer initiates the RRC connection establish procedure when the UE context management timer is running, discard the stored UE context.

Optionally, the timer management unit is further configured to: if a paging message is received when the UE context management timer is running, stop the UE context management timer.

With reference to the description and accompanying drawings hereinafter, the specific embodiments of the present invention are described in detail; and the manners in which the principle of the present invention is employed are illustrated. It should be understood that the embodiments of the present invention are not limited in scope. Within the spirit and scope defined by the appended claims, the embodiments of the present invention may include various variations, modifications, and equivalents.

The features described and/or illustrated with respect to a specific embodiment may be used in one or more other embodiments in the same or similar manner, or may be combined with the features in other embodiments, or may be used to replace the features in other embodiments.

It should be particularly noted that the term "comprise/include" used herein in this text refer to the existence of the features, whole pieces, steps or components, but do not exclude the existence or addition of one or more of other features, whole pieces, steps, or components.

### Brief Description of Drawings

More aspects of the present invention may be better understood with reference to the accompanying drawings hereinafter. The components in the accompanying drawings are not drawn according to the practical ratio, and are only intended to show the principle of the present invention. For ease of illustration and description of some parts of the present invention, corresponding parts in the accompanying drawings may be scaled up or scaled down.

The elements and features in one accompanying drawing or embodiment may be combined with the elements and features in one or more other accompanying drawings or embodiments. In addition, in the accompanying drawings, similar reference numerals denote corresponding components in the accompanying drawings, and may be used to indicate corresponding components used in more than one embodiment.
FIG. 1 is a schematic diagram of an RRC connection suspension;
FIG. 2 is a schematic diagram of an RRC connection resume procedure;
FIG. 3 is a flowchart of a UE context management method executed at a UE according to the present invention;
FIG. 4 is a schematic flowchart of processing at a UE according to Embodiment 1 of the present invention;
FIG. 5 is a schematic flowchart of processing at a UE according to Embodiment 2 of the present invention;
FIG. 6 is a schematic flowchart of processing at a UE according to Embodiment 3 of the present invention;
FIG. 7 to FIG. 9 are schematic flowcharts of processing at a UE according to Embodiment 4 of the present invention;
FIG. 10 is a schematic flowchart of configuration at a UE according to Embodiment 5 of the present invention;
FIG. 11 is a schematic flowchart of configuration on a network according to Embodiment 5 of the present invention;
FIG. 12 is a schematic flowchart of interaction on a network according to Embodiment 5 of the present invention; and
FIG. 13 is a schematic structural diagram of a UE according to Embodiment 6 of the present invention.

### Description of Embodiments

With reference to the accompanying drawings, the above described and other features of the present invention would be more pronounced through the description hereinafter. In the description and accompanying drawings, specific embodiments of the present invention are disclosed, and some embodiments that may be implemented based on the principle of the present invention are illustrated. It should be understood that the present invention is not limited to the described embodiments. On the contrary, the present invention includes all of the modifications, variations and equivalents falling within the scope defined by the appended claims. In addition, for simplicity, detailed description of the known art not directly related to the present invention is omitted to prevent confusion with respect to the understanding of the present invention.

With reference to the accompanying drawings and specific embodiments, a UE context management method according to the present invention is described in detail hereinafter.

Multiple embodiments according to the present disclosure are specifically described below by using an LTE mobile communications system and its subsequent evolved version as an exemplary application environment and an NB-IoT is used as an implementation scenario. However, it is to be noted that the present disclosure is not limited to the following embodiments, but may be applied to other wireless communication systems, such as a future 5G cellular communication system.

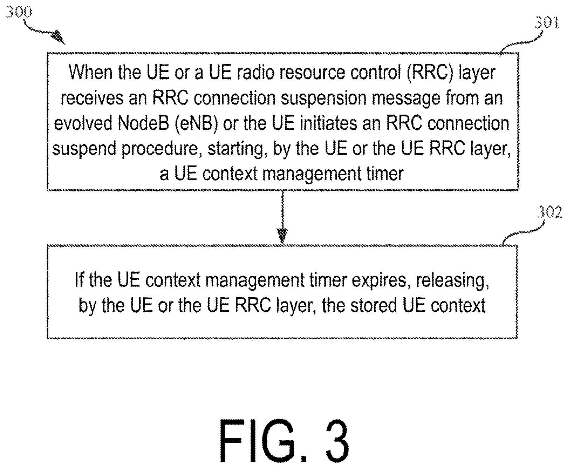

FIG. 3 is a flowchart of a UE context management method 300 executed at a UE according to the present invention.

As illustrated in FIG. 3, the method comprises step 301: when the UE or a UE radio resource control (RRC) layer receives an RRC connection suspension message from an evolved NodeB (eNB) or the UE initiates an RRC connection suspend procedure, starting, by the UE or the UE RRC layer, a UE context management timer. The RRC connection suspension message or an RRC connection suspend procedure is configured to suspend an RRC connection at the UE and store the UE context. The method further comprises step 302: if the UE context management timer expires, releasing, by the UE or the UE RRC layer, the stored UE context.

A timer is configured and the stored UE context is discarded when the timer expires, such that the UE context may be effectively managed.

Embodiments 1 to 6 of the present invention are described in detail in what follows.

### Embodiment 1

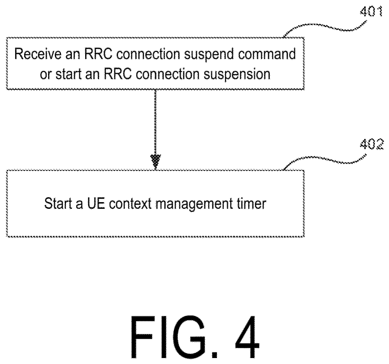

FIG. 4 is a flowchart of processing at a UE according to Embodiment 1 of the present invention. This embodiment provides a method for managing stored UE context at a UE according to a UE context management timer.

Step 401: A UE or a UE RRC layer receives an RRC connection suspension message or initiates an RRC connection suspend procedure. The RRC connection suspension message is used to instruct the UE to suspend an RRC connection and store UE context, which is referred to as an RRC connection suspension message in the present invention. The RRC connection suspend procedure is used to suspend an RRC connection and store UE context, which is referred to as an RRC connection suspend procedure in the present invention. Examples of the implementation of the RRC connection suspend procedure are as those described in the background part.

Step 402: The UE or the UE RRC layer starts a UE context management timer. The timer is configured to manage the UE context or discard the UE context. In the present invention, the timer is referred to as a UE context management timer.

In this embodiment, the value of the timer may be a fixed value; for example, a fixed value defined by predefinition or by default, or may be a value configured by the network, as described in Embodiment 5.

In this embodiment, the UE context may be UE access stratum (AS) context; and the UE may be a Narrowband-Internet of Things (NB-IoT) UE or a non-NB-IoT UE of any other type.

### Embodiment 2

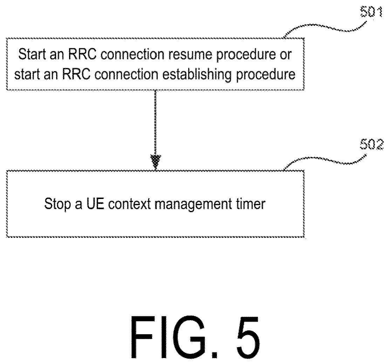

FIG. 5 is a flowchart of processing at a UE according to Embodiment 2 of the present invention. This embodiment provides a method for managing stored UE context at a UE according to a UE context management timer.

Step 501: A UE or a UE RRC layer initiates an RRC procedure or receives a paging message. The RRC procedure is configured to resume an originally suspended RRC connection, which is referred to as an RRC connection resume procedure in the present invention. Examples of implementing the RRC connection resume procedure is as those described in the background part; or the RRC procedure may be an RRC connection setup procedure.

Step 502: If a UE context management timer is running, the UE or the UE RRC layer stops the timer. The timer is configured to manage the UE context or discard the UE context. In the present invention, the timer is referred to as a UE context management timer.

Optionally, in this step, if the UE or the UE RRC layer initiates an RRC connection resume procedure in step 501, the UE still keeps the stored UE context; or if the UE or the UE RRC layer initiates an RRC connection setup procedure, the UE discards the UE context.

In this embodiment, the value of the timer may be a fixed value; for example, a fixed value defined by predefinition or by default, or may be a value configured on the network, as described in Embodiment 5.

In this embodiment, the UE context may be UE access stratum (AS) context; and the UE may be a Narrowband-Internet of Things (NB-IoT) UE or a non-NB-IoT UE of any other type.

### Embodiment 3

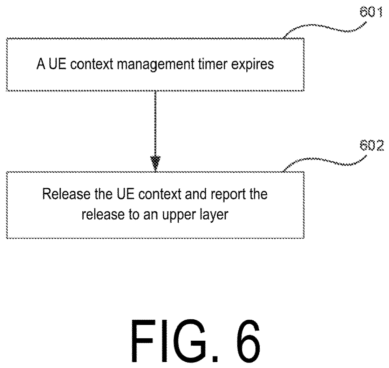

FIG. 6 is a flowchart of processing at a UE according to an embodiment of the present invention. This embodiment provides a method for managing stored UE context at a UE according to a UE context management timer.

Step 601: A UE context management timer expires. The timer is configured to manage the UE context or discard the UE context. In the present invention, the timer is referred to as a UE context management timer.

Step 602: A UE or a UE RRC layer performs the following actions:
Action 1: Discard the stored UE context.
Action 2: Notify an upper layer of the expiration of the timer and/or discard the UE context.
Action 3: Reset a MAC layer.

In this step, actions 1 to 3 may be optional; that is, the UE may perform one or more of actions 1 to 3. Typically, the UE performs actions 1 to 2; that is, the UE or the UE RRC layer discards the stored UE context and notify the upper layer of the discard of the UE context.

In this embodiment, the value of the timer may be a fixed value; for example, a fixed value defined by predefinition or by default, or may be a value configured on the network, as described in Embodiment 5.

In this embodiment, the UE context may be UE access stratum (AS) context; and the UE may be a Narrowband-Internet of Things (NB-IoT) UE or a non-NB-IoT UE of any other type.

### Embodiment 4

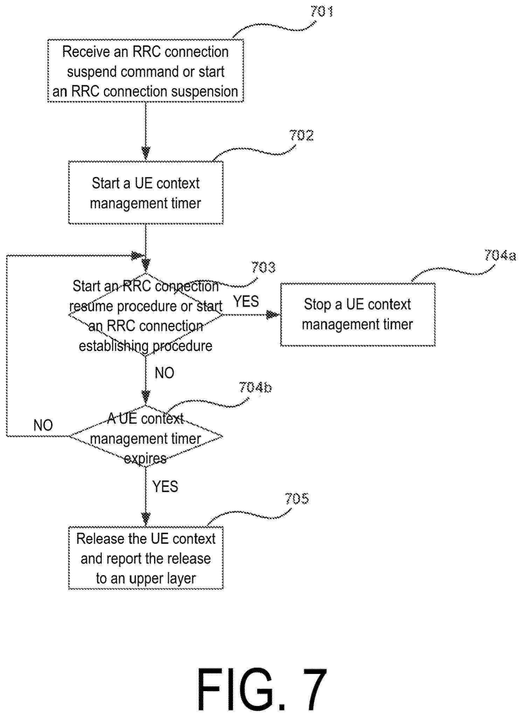

FIG. 7 is a flowchart of processing at a UE according to an embodiment of the present invention. This embodiment provides a method for managing stored UE context at a UE according to a UE context management timer.

Step 701: A UE or a UE RRC layer receives an RRC message or initiate an RRC procedure. The RRC message is used to instruct the UE to suspend an RRC connection and store UE context, which is referred to as an RRC connection suspension message in the present invention. The RRC procedure is used to suspend an RRC connection and store UE context, which is referred to as an RRC connection suspend procedure in the present invention. Examples of the implementation of the RRC connection suspend procedure are as those described in the background part.

Step 702: The UE or the UE RRC layer starts a UE context management timer. The timer is configured to manage the UE context or discard the UE context. In the present invention, the timer is referred to as a UE context management timer.

Step 703: Judge whether the UE or the UE RRC layer initiates an RRC procedure, or receives a paging message. If the judgment is positive, step 704a is performed; otherwise, step 704b is performed.

The RRC procedure is configured to resume an originally suspended RRC connection, which is referred to as an RRC connection resume procedure in the present invention. Examples of implementing the RRC connection resume procedure is as those described in the background part; or the RRC procedure may be an RRC connection setup procedure.

Step 704a: The UE or the UE RRC layer stops a UE context management timer.

Optionally, in this step, if the UE or the UE RRC layer initiates an RRC connection resume procedure in step 703, the UE still keeps the stored UE context; or if the UE or the UE RRC layer initiates an RRC connection setup procedure, the UE discards the UE context.

Step 704b: Judge whether the UE context management timer expires. If the judgment is positive, step 705 is performed; otherwise, step 703 is performed.

Step 705: A UE or a UE RRC layer performs the following actions:
Action 1: Discard the stored UE context.
Action 2: Notify an upper layer of the expiration of the timer and/or discard the UE context.
Action 3: Reset a MAC layer.

In this step, actions 1 to 3 may be optional; that is, the UE may perform one or more of actions 1 to 3. Typically, the UE performs actions 1 to 2; that is, the UE or the UE RRC layer discards the stored UE context and notify the upper layer of the discard of the UE context.

In this embodiment, the value of the timer may be a fixed value; for example, a fixed value defined by predefinition or by default, or may be a value configured on the network, as described in Embodiment 5.

In this embodiment, the UE context may be UE access stratum (AS) context; and the UE may be a Narrowband-Internet of Things (NB-IoT) UE or a non-NB-IoT UE of any other type.

A person skilled in the art will understand that the method as illustrated in FIG. 7 is illustrative rather than limiting. Specifically, the method is implemented not following the specific sequence for performing the operations illustrated in FIG. 7.

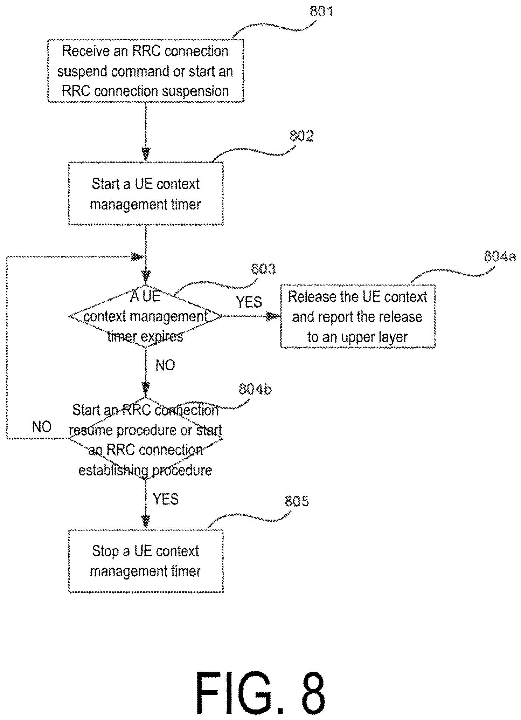

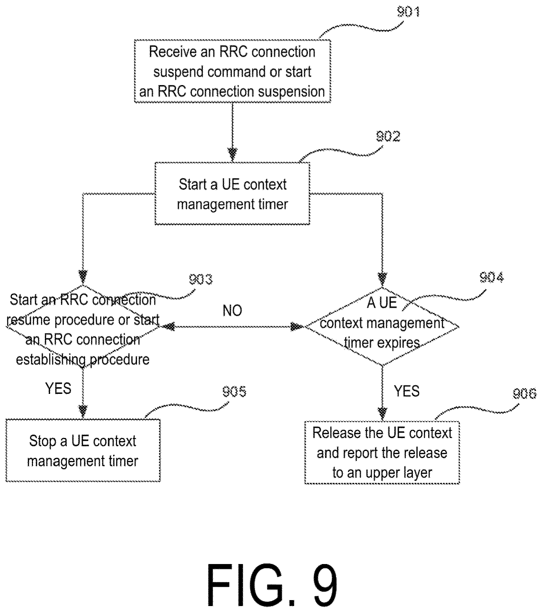

For example, FIG. 8 illustrates performing the step of firstly judging whether the UE or the UE RRC layer initiates an RRC procedure or receives a paging message, and then the step of judging whether the UE context management timer expires. FIG. 9 illustrates the situation where the step of judging whether the UE or the UE RRC layer initiates an RRC procedure or receives a paging message and the step of judging whether the UE context management timer expires are performed.

### Embodiment 5

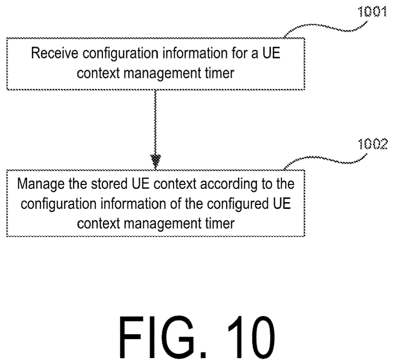

FIG. 10 is a flowchart of configuration at a UE according to Embodiment 5 of the present invention.

Step 1001: A UE receives a configuration message, wherein the configuration message comprises configuration information of a UE context management timer; and the timer is configured to manage UE context or discard UE context, which is referred to as a UE context management timer in the present invention.

In this embodiment, the configuration information comprises a value of the timer. For example, using the timer named T_{CTX_REL} as an example, the configuration information comprises a value of the T_{CTX_REL}, which may be any one of {ms100, ms200, ms300, ms400, ms600, ms1000, ms1500, ms2000, min5, min10, min20, min30, hr1, hr2, hr8, hr16, day1, day2, day4}. Nevertheless, the value is not limited to the above listed ones.

The configuration message received by the UE may be an RRC message sent by the eNB. The configuration message may be, in one aspect, a system information message sent in a broadcast manner, such as a second system information block (SIB 2). In another aspect, a UE dedicated RRC message, for example, an RRC connection reconfiguration message, an RRC connection suspension message or the like. In addition, the configuration message may also be an NAS message sent by a mobility management entity (MME). The description above are only implementation examples of the configuration message, but the configuration message is not limited thereto.

In this embodiment, the UE context may be UE access stratum (AS) context; and the UE may be a Narrowband-Internet of Things (NB-IoT) UE or a non-NB-IoT UE of any other type.

Step 1002: The UE uses the received configuration information of the UE context management timer and manages the stored UE context according to the configuration information of the timer. The specific implementation of managing the stored UE context by the UE according to the timer is illustrated in Embodiments 1 to 4, but is not limited thereto.

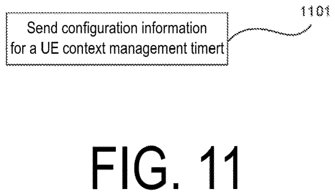

FIG. 11 is a flowchart of configuration on a network according to Embodiment 5 of the present invention.

Step 1101: A network sends a configuration message, wherein the configuration message comprises configuration information of a UE context management timer; and the timer is configured to manage UE context or discard UE context, which is referred to as a UE context management timer in the present invention.

In this embodiment, the configuration information comprises a value of the timer. For example, using the timer named T_{CTX_REL} as an example, the configuration information comprises a value of the T_{CTX_REL}, which may be any one of {ms100, ms200, ms300, ms400, ms600, ms1000, ms1500, ms2000, min5, min10, min20, min30, hr1, hr2, hr8, hr16, day1, day2, day4}. Nevertheless, the value is not limited to the above listed ones.

The configuration message sent by the network may be an RRC message sent by the eNB. The configuration message may be, in one aspect, a system information message sent in a broadcast manner such as an SIB 2. In another aspect, a UE dedicated RRC message, for example, an RRC connection reconfiguration message, an RRC connection suspension message or the like. In addition, the configuration message may also be an NAS message sent by a mobility management entity (MME). The description above are only implementation examples of the configuration message, but the configuration message is not limited thereto.

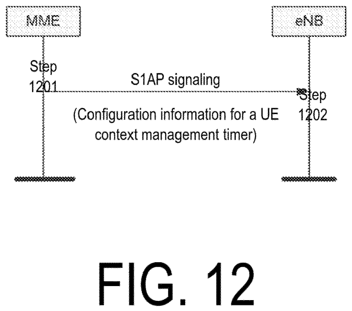

FIG. 12 is a flowchart of interaction on a network according to Embodiment 5 of the present invention.

Step 1201: An MME sends a configuration message, wherein the configuration message comprises configuration information of a UE context management timer; and the timer is configured to manage UE context or discard UE context, which is referred to as a UE context management timer in the present invention.

In this embodiment, the configuration information comprises a value of the timer. For example, using the timer named T_{CTX_REL} as an example, the configuration information comprises a value of the T_{CTX_REL}, which may be any one of {ms100, ms200, ms300, ms400, ms600, ms1000, ms1500, ms2000, min5, min10, min20, min30, hr1, hr2, hr8, hr16, day1, day2, day4}. Nevertheless, the value is not limited to the above listed ones.

The configuration message sent by the MME is an S1AP message, such as an initial context request message, or a bearer establish/modify/release message, or a UE context release message or the like. The description above are only implementation examples of the configuration message, but the configuration message is not limited thereto.

Step 1202: An eNB receives the configuration information, and assigns the information to the UE. The assignment of the information by the eNB to the UE is as illustrated in FIG. 11.

### Embodiment 6

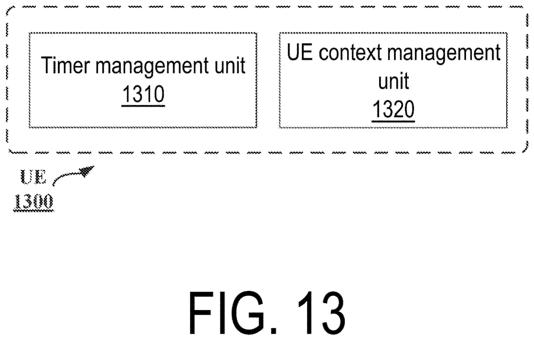

FIG. 13 is a schematic structural diagram of a UE 1300 according to Embodiment 5 of the present invention. As illustrated in FIG. 13, the UE 1300 comprises a timer management unit 1310 and a UE context management unit 1320. The timer management unit 1310 is configured to: when the UE receives an RRC connection suspension message from an evolved NodeB (eNB) or the UE initiates an RRC connection suspend procedure, start a UE context management timer by using the UE or the UE RRC layer. The UE context management unit 1320 is configured to: when the UE receives an RRC connection suspension message from the eNB or the UE initiates an RRC connection suspend procedure, suspend an RRC connection at the UE and store the UE context; and if the UE context management timer expires, discard the stored UE context.

Optionally, the timer management unit is further configured to: if the UE or the UE RRC layer initiates an RRC connection resume procedure or an RRC connection setup procedure when the UE context management timer is running, stop the UE context management timer. Further, the UE context management unit may be further configured to: if the UE or the UE RRC layer initiates the RRC connection resume procedure when the UE context management timer is running, the stored UE context remains to be kept; or if the UE or the UE RRC layer initiates the RRC connection establish procedure when the UE context management timer is running, discard the stored UE context.

Optionally, the timer management unit may further be configured to: if a page message is received when the UE context management timer is running, stop the UE context management timer.

It should be understood that the above-described embodiments of the present invention may be implemented through software, hardware, or a combination of software and hardware. For example, various components of the base station and user equipment in the above embodiments can be implemented through multiple devices; and these devices include, but are not limited to, an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

In this application, the "base station" refers to a mobile communication data and control switching center with large transmission power and wide coverage area, including resource allocation scheduling, data receiving, and transmitting functions. The term "user equipment" refers to a user mobile terminal, such as a terminal device that can perform wireless communication with a base station or a micro base station, including a mobile phone, a notebook, or the like.

In addition, the embodiments of the present invention, disclosed here, may be implemented on a computer program product. More specifically, the computer program product is a product as follows: The product has a computer-readable medium on which computer program logic is encoded. The computer program logic, when executed on a computing device, provides relevant operations to implement the above-described technical solutions of the present invention. When executed on at least one processor of a computing system, the computer program logic enables the processor to execute the operations (methods) described in the embodiments of the present invention. Such an arrangement of the present invention is typically provided as software, code, and/or other data structures that are configured or encoded on a computer-readable medium, such as an optical medium (for example, a CD-ROM), a floppy disk, or a hard disk, or other media such as firmware or microcode on one or more ROM or RAM or PROM chips, or downloadable software images, shared database and so on in one or more modules. Software or firmware or such configuration may be installed on a computing device so that one or more processors in the computing device execute the technical solutions described in the embodiments of the present invention.

Although the present invention has been shown in connection with the preferred embodiments of the present invention, it will be understood by those skilled in the art that various modifications, substitutions and alterations may be made to the present invention without departing from the spirit and scope of the present invention. Accordingly, the present invention should not be defined by the above-described embodiments, but should be defined by the appended claims and their equivalents.

## Claims

1. A UE context management method executed at a user equipment (UE), the method comprising: when the UE or a UE radio resource control (RRC) layer receives an RRC connection suspension message from an evolved NodeB (eNB) or the UE initiates an RRC connection suspend procedure, starting, by the UE or the UE RRC layer, a UE context management timer, wherein the RRC connection suspension message or an RRC connection suspend procedure is configured to suspend an RRC connection at the UE and store the UE context; and if the UE context management timer expires, discarding, by the UE or the UE RRC layer, the stored UE context.

2. The method according to claim 1, further comprising: if the UE or the UE RRC layer initiates an RRC connection resume procedure or an RRC connection setup procedure when the UE context management timer is running, stopping, by the UE or the UE RRC layer, the UE context management timer.

3. The method according to claim 2, further comprising: if the UE or the UE RRC layer initiates the RRC connection resume procedure, the stored UE context remains to be kept; if the UE or the UE RRC layer initiates an RRC connection setup procedure, the stored UE context is discarded.

4. The method according to any one of claims 1 to 3, further comprising: if a page message is received when the UE context management timer is running, stopping, by the UE or the UE RRC layer, the UE context management timer, and the stored UE context remains to be kept.

5. The method according to any one of claims 1 to 3, wherein the UE context is UE access stratum (AS) context.

6. The method according to any one of claims 1 to 3, wherein the UE is a Narrowband-Internet of Things (NB-IoT) UE or a non-NB-IoT UE.

7. The method according to any one of claims 1 to 3, wherein a value of the timer is predetermined to a fixed value.

8. The method according to any one of claims 1 to 3, wherein the value of the timer is configured via an RRC signaling by the eNB or configured via a non-access stratum (NAS) signaling by a mobility management entity (MME).

9. A user equipment (UE) configured to manage UE context, the UE comprising: a timer management unit, configured to: when the UE receives an RRC connection suspension message from an evolved NodeB (eNB) or the UE initiates an RRC connection suspend procedure, start a UE context management timer by using the UE or the UE RRC layer; a UE context management unit, configured to: when the UE receives the RRC connection suspension message from the eNB or the UE initiates the RRC connection suspend procedure, suspend an RRC connection at the UE and store UE context; and if the UE context management timer expires, discard the stored UE context.

10. The UE according to claim 9, wherein the timer management unit is further configured to: if the UE or the UE RRC layer initiates an RRC connection resume procedure or an RRC connection setup procedure when the UE context management timer is running, stop the UE context management timer.

11. The UE according to claim 10, wherein the UE context management unit is further configured to: if the UE or the UE RRC layer initiates the RRC connection resume procedure when the UE context management timer is running, the stored UE context remains to be kept; or if the UE or the UE RRC layer initiates the RRC connection establish procedure when the UE context management timer is running, discard the stored UE context.

12. The UE according to any one of claims 9 to 11, wherein the timer management unit is further configured to: if a paging message is received when the UE context management timer is running, stop the UE context management timer.

13. The UE according to any one of claims 9 to 11, wherein the UE context is UE access stratum (AS) context.

14. The UE according to any one of claims 9 to 11, wherein the UE is a Narrowband-Internet of Things (NB-IoT) UE or a non-NB-IoT UE.

15. The UE according to any one of claims 9 to 11, wherein a value of the timer is predetermined to a fixed value.

16. The UE according to any one of claims 9 to 11, wherein the value of the timer is configured via an RRC signaling by the eNB or configured via a non-access stratum (NAS) signaling by a mobility management entity (MME).
